# EUROPEAN PATENT APPLICATION

(11) **EP 2 541 446 A1**
(43) Date of publication of application: **02.01.2013**
(21) Application number: 12173449.5
(22) Date of filing: 25.06.2012
(51) Int. Cl.: G06F 17/30

(54) **Method and apparatus for performing a search for article content at a plurality of content sites**

(30) Priority: 30.06.2011 US 201113173172
(71) Applicant: Copyright Clearance Center, Inc., Danvers, MA 01923 (US)
(72) Inventor: Wojtowicz, Lech Juliusz, Kensington, NH 03833 (US)
(74) Representative: Borchert, Uwe Rudolf

(57) **Abstract**

In order to retrieve article level content from a plurality of content providers, a federated search program receives a generic query from a user and dispatches the query simultaneously to a plurality of connector objects. Each connector object that is associated with a particular content source and contains source specific code that reformats the generic query into a proprietary format required for the associated content source. The proprietary query is then dispatched to the content source. When the results at the content source are ready, the result set is fetched by the connector. The fetched results are then mapped into a standard format. The standard result sets from the different content sources are then merged into a single consolidated result set. Duplicate documents are removed from the consolidated result set and the final results are sorted in accordance with criteria specified by the user and presented to the user.

## Description

This invention relates to digital rights display and methods and apparatus for determining reuse rights for content. Works, or "content", created by an author is generally subject to legal restrictions on reuse. For example, most content is protected by copyright. In order to conform to copyright law, content users often obtain content reuse licenses. A content reuse license is actually a "bundle" of rights, including rights to present the content in different formats, rights to reproduce the content in different formats, rights to produce derivative works, etc. Thus, depending on a particular reuse, a specific license to that reuse may have to be obtained.

Many knowledge workers attempt to determine which rights are available for particular content before using that content in order to avoid infringing legitimate rights of rightsholders. If rights are sought for a particular publication, several alternatives are available. For example, the worker can often determine the publisher of the publication from a standard publication number, such as an ISBN, from the author or from the content itself. The worker can then visit the publisher's website to determine what rights are available. Alternatively, the worker can visit the website of a rights clearing house, such as the Copyright Clearance Center, located in Danvers, Massachusetts. This organization partners with many publishers to offer licensed rights from each publisher so that the worker can search for publications using information, such as an ISBN, an author's name or words in the publication title. Once the publication has been located, a variety of reuse rights are displayed from various sources. The worker can then select the most appropriate right at an appropriate price. For example, the worker may belong to an organization that has pre-purchased licenses from certain publishers, but not others, in which case the worker will select a publication that is available from a source which is already licensed.

However, if rights are sought only for a particular article, identifying an appropriate source is more difficult. More specifically, authors frequently submit the same article to a variety of publications, so that the article appears in several publications over a period of time. In addition, some publications reprint articles that originally appeared in other publications, these reprinted articles may appear singly or in collections. The identification is further complicated because no single source offers a comprehensive database of all articles and where they have been published. Some publishers expose a search service offering the ability to search their content, but such searches must be conducted publisher by publisher. These searches are inconvenient because each publisher has a specific format in which queries must be submitted and a specific format in which results are returned so that a comprehensive search requires knowledge of each publisher and a consolidation of the search results.

In accordance with the principles of the invention, a federated search program receives a generic query from a client associated with a user and generates a plurality of sub-queries from the generic query. Each sub-query is generated by a connector object that is associated with a particular content source and the generic query is dispatched simultaneously to all connector objects. Each connector object contains source specific code that reformats the generic query into a proprietary format required for the associated content source. The proprietary query is then dispatched to the content source. When the results at the content source are ready, the result set is fetched by the connector. The fetched results are then mapped into a standard format. The standard result sets from the different content sources are then merged into a single consolidated result set. Duplicate documents are removed from the consolidated result set and the final results are sorted in accordance with criteria specified by the user and presented to the user.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings
- Fig. 1: a block schematic diagram illustrating the major components of the present invention and data flow between the components;
- Figs. 2a and 2b: when placed together, the steps in an illustrative method using the system of Fig. 1 to process a user search request;
- Fig. 3: a screen shot of a basic search display generated by a web application in which a user initiates a publication search by entering a publication title or a publication identification number;
- Fig. 4: a screen shot of an advanced search display in which a user initiates a publication search by entering various information items concerning a publication;
- Fig. 5: a screen shot of an article search screen display which is displayed by a web application when article-specific rights are chosen in the displays shown in Figs. 3 and 4;
- Fig. 6: a detailed view of components that comprise a connector object, which queries the search service of a particular content provider, and
- Fig. 7: the steps in an illustrative process for removing duplicate records from a consolidated result set.

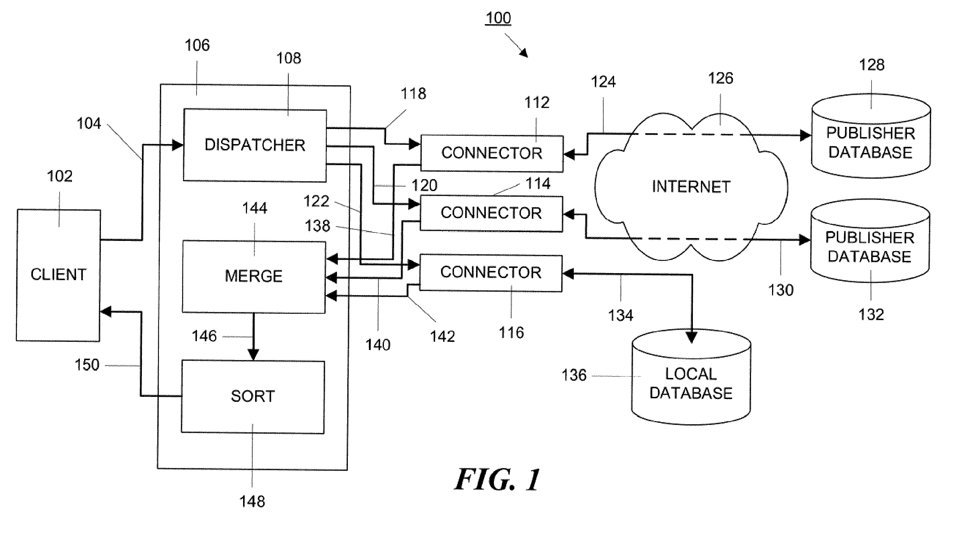

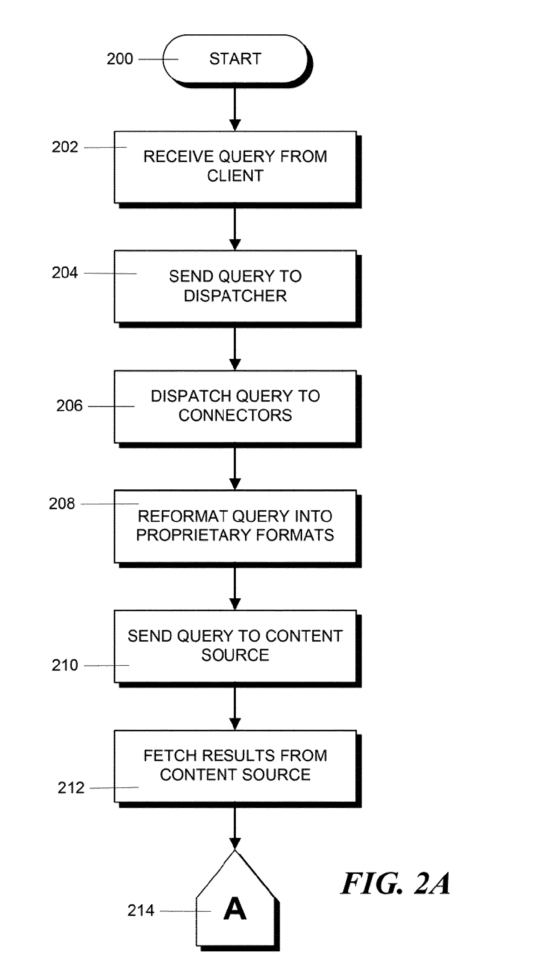

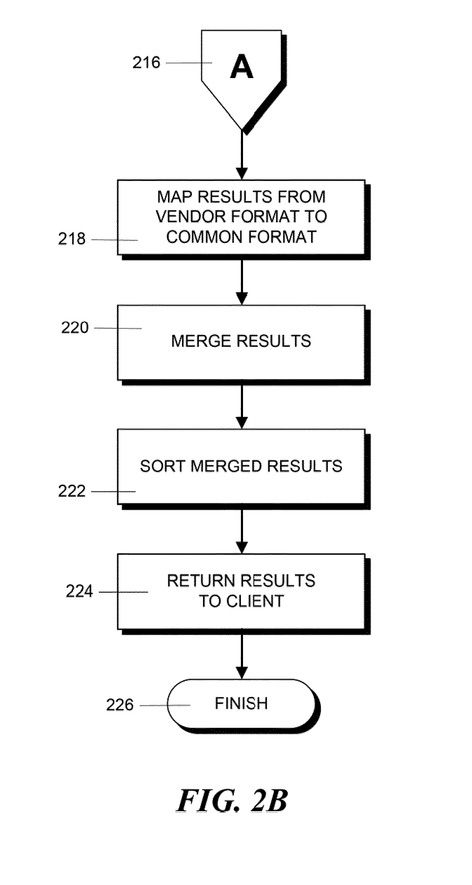

Figs. 1, 2a and 2b illustrate an apparatus 100 in block schematic form and the steps in a process for performing a content search at the article level in accordance with the principles of the present invention. This process starts in step 200 and proceeds to step 204 where a query is received from client 102.

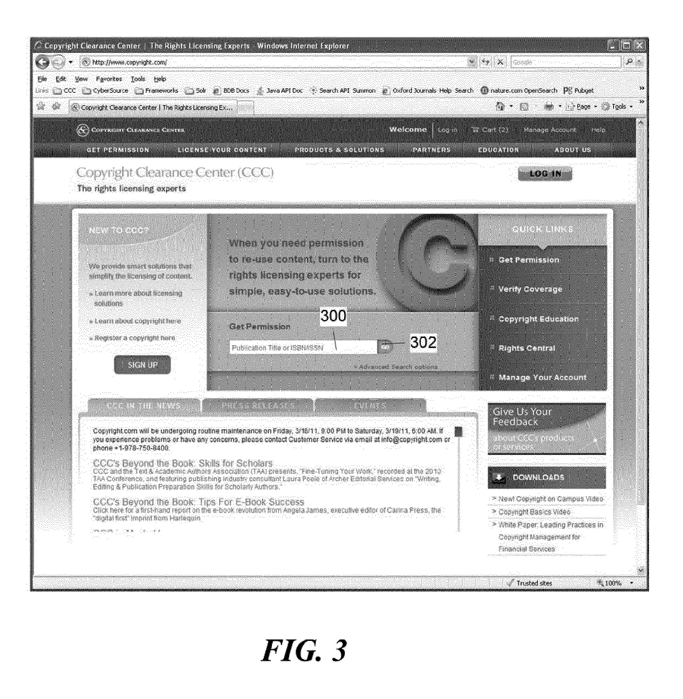

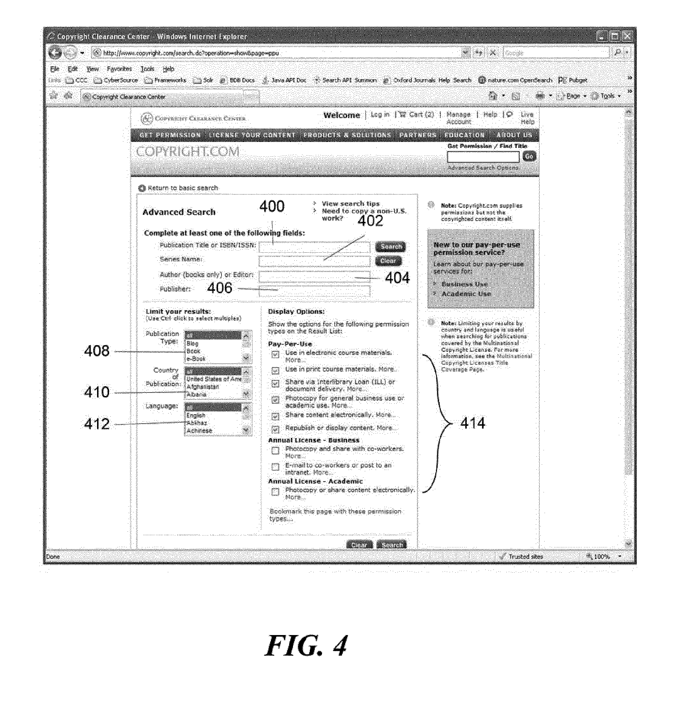

Client 102 could be any application that generates an article level search. For example, one such application is a web application that is published with the URL www.copyright.com by Copyright Clearance Center, Inc. (CCC). This web application generates several search displays of which screen shots are shown in Figs. 3 and 4. Fig. 3 shows a basic search display in which a user initiates a search by entering a publication title or a publication identification number into textbox 300 and clicking on the "GO" command button 302.

Fig. 4 shows an alternate "Advanced" search display in which a user can enter search criteria such as title, publication identification number, series name, author or editor and publisher into textboxes 400-406. The search can be limited by entering qualifying terms, such as the publication type, country and language into listboxes 408-412. In addition, different right types can be displayed by checking or unchecking the checkboxes in section 414.

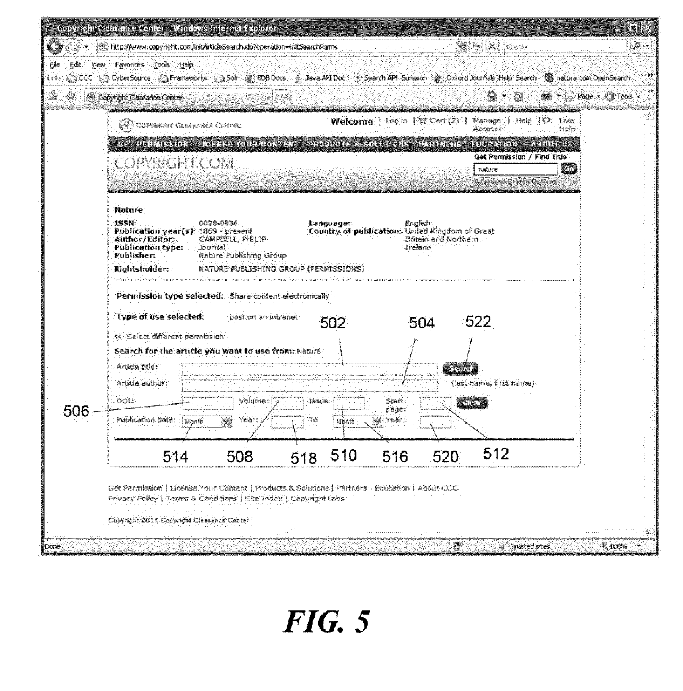

Both, the basic search initiated from the display shown in Fig. 3 and the advanced search initiated by the display shown in Fig. 4 search for publications. After a publication is selected by the user, different use rights are displayed which allow the user to purchases specific rights for the content. If article-specific rights are chosen, then the www.copyright.com web application displays an article search screen display, such as that illustrated in Fig. 5. This search display allows a user to search for an article in the selected publication by title (by filling in textbox 502), author (by filling in textbox 504), digital object ID number (by filling in textbox 506), volume (by filling in textbox 508), issue (by filling in textbox 510), start page number (by filling in textbox 512) and publication date ranges (by filling in comboboxes 514, 516 and textboxes 518 and 520). Clicking the "search" button 522 executes a multi-target search against all targets in which the selected article for this publication could be found.

This search is initiated when the client 102 provides a generic query to the search service 106, and specifically to the dispatcher 108 as indicated by arrow 104 and as set forth in step 204. As an example, this query might look like:
Title: Geophysics
Author: Akerberg

As previously mentioned, the search is conducted simultaneously over a plurality of content sources. One embodiment uses four content sources or search "targets": an internal CCC database, a Nature database, a PubGet database and a New York Times (NYT) database. Each search target has its own specific query language in which it expects queries to be expressed. For example the CCC internal database uses Solr technology which uses internally the Lucene engine language. Details of this language can be found at: lucene.apache.org/java/2_3_2/queryparsersyntax.html. Similarly, details of the Nature query language can be found at: nature.com/opensearch/. The Pubget and NYT query language details can be found at corporate.pubget.com/services/premium and developer.nytimes.com/, respectively.

Therefore, the generic search must be converted into the local query language for each content source. Accordingly, next, in step 206, the dispatcher 108 simultaneously dispatches the generic query to a plurality of connector objects, of which three 112, 114 and 116, are shown in Fig. 1 as set forth in step 206 as schematically illustrated by arrows 118, 120 and 122.

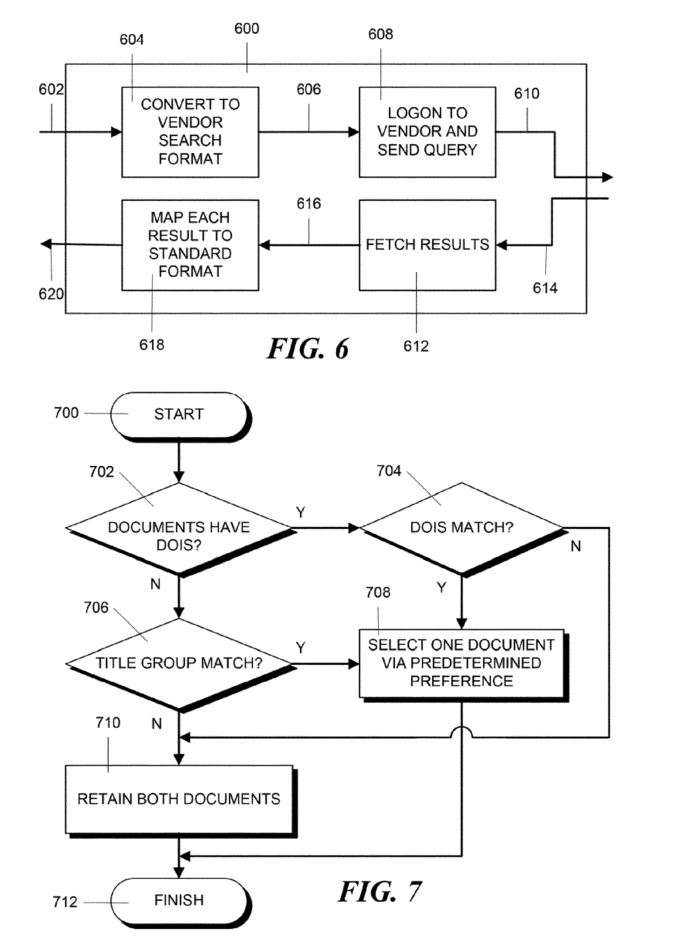

The details of a connector object are shown in Fig. 6. Each connector object 600 is specific to a content source and contains code specific to the content source query language 604 to convert the generic request into an appropriate query for that source. In general this conversion involves parsing the generic query to obtain "tokens" for each query term and then adding a query phrase including each token in a form suitable for accessing the particular content source. For example, the generic query listed above would be converted, in step 208, into a query to the local CCC Solr index which looks like:
+title:(geophysics) main_title:geophysics*^2 title:"geophysics"^2
main_title:"geophysics"^2 +author:(Akerberg) first_auth_edit:akerberg*^2
author: "Akerberg "A 2 first_auth_edit:"Akerberg"^2

This query includes parts that are created to shape a relevancy ranking calculation.

The same query would look like:
http://www.nature.com/opensearch/request?version=1.1 &operation=searchRetrieve& httpAccept=&recordPacking=xml&recordSchema=pam&sortKevs=%2Cpam%2C0&qu ery=dc.creator+all+%22Akerberg%22+AND+dc.title+all+%22geophysics%22&maxim umRecords=20&startRecord=1

in the query language used to access the Nature database.

The corresponding queries in the PubGet and NYT site specific languages are:
http://pubget.com/developer/search?&q=author%3AAkerberg+AND+title%3Ageophysi cs&page=1 &repo=pubmed&count=20&sort=newest
and
http://api.nytimes.com/svc/search/v1/article?apikev=5dcbc33e15d32e4f43d19e389a917fff:1:60529734&fields=title,byline,date,desk f acet,source facet,word count,url&query=+byline:Akerberg%20+title:geophysics&offs et=0&rank=newest
where the "key" clause is a special key that allows access to NYT repository of articles.

In addition, an ISSN or ISBN number for the publication or book (obtained from user input in the basic or advanced search displays shown in Figs. 3 and 4, respectively or as the results of a publication search) is used to narrow down the search to only articles (or book chapters in case of an ISBN) from the journal or book identified by the number.

After, the generic query has been reformatted into query format for a particular content provider, the reformatted query is provided as indicated schematically by arrow 606 to a database interface 608 which logs onto the database (if necessary) and, in step 210, transmits the reformatted query to the content provider as schematically illustrated by arrow 610 in Fig. 6 and arrows 124, 130 and 134 in Fig. 1. As illustrated in Fig. 1, in some cases the request is transmitted in a conventional fashion to the content provider sites (128 and 132) via the Internet 126. For local databases, such as database 136, the query may be transmitted directly as indicated by arrow 134 via a LAN or other network.

The connector objects 112, 114 and 116 then wait for search results to become available at the content providers sites, and when available as indicated by step 212, a data fetcher 612 fetches the results as indicated schematically by arrow 614 and provides the results to a format mapper 618. Format mapping is necessary because, as with the query language, the results are generally in a format that is specific to each content provider, such as XML or JSON.

The process then proceeds, via off-page connectors 214 and 216, to step 218 where the format mapper 618 in the connector object 600 maps the query result metadata from each content provider into a common format. The results of step 218 produce a result list from each search connector and generate a "list of lists" with search results - each search target produced its own selection (list) of records. Next, in step 220, the results from each connector object, for example, connector objects 112, 114 and 116, are provided to a merge module 144 as schematically indicated by arrows 138, 140 and 142 where the results are merged by indentifying duplicates between search targets.

The merging process involves comparing the metadata of pairs of documents with each document of the pair being taken from a different target to create a consolidated list. Documents in the consolidated list are then compared to documents of a target other then the two targets used to compose the consolidated list. This process is repeated until all documents in the consolidated list have been compared to all documents in the different target lists. The merging process for a pair of documents is shown in more detail in Fig. 7. In particular, this process starts in step 700 and proceeds to step 702 where a check is made whether both documents have digital object identifiers (DOls). If both documents have DOls, then the process proceeds to step 704 where a determination is made whether the DOls match. If it is determined in step 704 that the DOls match, then, the documents are considered duplicates. In this case, in step 708, one of the duplicate documents is selected for further processing based on a predetermined order of precedence for documents based on their origin. For example, for the document sources listed above this order might be from highest order to lowest order: Local database, NATURE, PUBGET and NYT. The process then finishes in step 712.

Alternatively, if the DOls of the two documents do not match as determined in step 704, the documents are considered different and the process proceeds to step 710 where both documents are retained. The process then finishes in step 712.

Alternatively, if in step 702 it is determined that at least one of the two documents being compared does not have a DOl, then the process proceeds to step 706 where a "title group" match is performed. The title group includes metadata such as title, volume, issue, start page. If the number of matching words (tokens) in the title is less than fifty percent of total number of words in the longer of the two titles, the documents are considered to be different and the process proceeds to step 710 where both records are added to the consolidated search list.

If the number of matching tokens in the title is equal to, or more than, fifty percent of total number of words in the longer of the two titles, then the volume, issue and start page of each document are compared. If at least two out of three of these latter metadata values match, the works are considered the same and the process proceeds to step 708. Otherwise the works are considered different and the process proceeds to step 710. After duplicate works between targets have been identified, there is a consolidated result set created for further processing.

Returning to Fig. 1, the consolidated result set is provided, as schematically illustrated by arrow 146 to a sort module 148 where, as set forth in step 222 (Fig. 2b) the results are sorted. In one embodiment, the documents are sorted by four different sorting criteria (relevance, title, publisher and date). In order to achieve reasonable sort times a sorting program called the Lucene search engine (described at lucene.apache.org/java/docs/index.html) was used to perform this sort. The Lucene search engine offers a RAMDirectory as one of its options for storage. When the RAMDirectory is used, records are not written to disk but instead are kept in memory while the search index is created. This memory construct is then used for immediate searching/sorting.

The RAMDirectory sort requires a sort data structure called InMemoryWork to be defined which includes, for each record, the searching/sorting fields: title, author, standard number and standard number type (DOI, Pubmed ID) and date, plus a reference to the entire set of metadata for each document. Documents from the consolidated record set were then mapped to this data structure and added to the in-memory Lucene index. Then this index was re-queried in the sort order requested by the calling client. This arrangement took about 100-250 milliseconds to pull 100 documents from four connector objects (400 works total), to build an in-memory index from these documents, to re-query and retrieve the document works in the desired sort order.

While the invention has been shown and described with reference to a number of embodiments thereof, it will be recognized by those skilled in the art that various changes in form and detail may be made herein without departing from the scope of the invention as defined by the appended claims.

### List of reference signs

- 100: apparatus
- 102: client
- 104: arrow
- 106: search service
- 108: dispatcher
- 112: connector object
- 114: connector object
- 116: connector object
- 118: arrow
- 120: arrow
- 122: arrow
- 124: arrow
- 126: internet
- 128: provider site
- 130: arrow
- 132: provider site
- 134: arrow
- 136: database
- 138: arrow
- 140: arrow
- 142: arrow
- 144: merge module
- 146: arrow
- 148: sort module
- 200: step
- 202: step
- 204: step
- 206: step
- 208: step
- 210: step
- 212: step
- 214: off-page connector
- 216: off-page connector
- 218: step
- 220: step
- 222: step
- 224: step
- 226: step
- 300: textbox
- 302: command button
- 400: textbox
- 402: textbox
- 404: textbox
- 406: textbox
- 408: list box
- 410: list box
- 412: list box
- 414: section
- 502: textbox
- 504: textbox
- 506: textbox
- 508: textbox
- 510: textbox
- 512: textbox
- 514: combobox
- 516: combobox
- 518: textbox
- 520: textbox
- 522: search button
- 600: connector object
- 602: arrow
- 604: query language
- 606: arrow
- 608: database interface
- 610: arrow
- 612: data fetcher
- 614: arrow
- 616: arrow
- 618: format mapper
- 620: arrow
- 700: step
- 702: step
- 704: step
- 706: step
- 708: step
- 710: step
- 712: step

## Claims

1. A method for performing a search for article content at a plurality of content source sites in response to a query entered into a user computer having a processor and a memory, the method comprising:
(a) using the processor to dispatch the query simultaneously to a plurality of connector objects in the memory, each connector object, upon receiving the query, fetching search results from one of the plurality of content sources and storing the fetched result set in the memory;
(b) using the processor to merge all result sets into a consolidated result set in the memory by eliminating duplicate results from the mapped result sets in the memory; and
(c) using the processor to create a sort index of the consolidated result set in the memory.

2. The method of claim 1, **characterized in that** in step (a), each connector object, upon receiving the query, controls the processor to reformat the query into a proprietary query format used by one of the plurality of content sources, to send the reformatted query to that content source, to fetch results produced by the query from that content source, to map the results into a common result format and to store the mapped results in the memory.

3. The method of claim 1, **characterized in that** step (b) comprises:
(b1) comparing metadata from two documents;
(b2) when both documents have digital object identifiers and the digital object identifiers match, adding one of the two documents to the consolidated result set; and
(b3) when both documents have digital object identifiers and the digital object identifiers do not match, adding both of the two documents to the consolidated result set.

4. The method of claim 3, **characterized in that** step (b) further comprises:
(b4) when both documents do not have digital object identifiers, comparing titles of the two documents;
(b5) if more than a predetermined percentage of words in the two titles match, adding one of the documents to the consolidated result set;
(b6) if less than the predetermined percentage of words in the two titles match, comparing additional metadata items;
(b7) if more than a second predetermined percentage of additional metadata items match in step (b6), adding one of the documents to the consolidated result set; and
(b8) if less than the second predetermined percentage of additional metadata items match in step (b6), adding both of the documents to the consolidated result set.

5. The method of claim 4, **characterized in that** the predetermined percentage is fifty percent.

6. The method of claim 4, **characterized in that** the additional metadata items include the volume, issue and start page of a document.

7. The method of claim 4, **characterized in that** the second predetermined percentage is sixty-six percent.

8. The method of claim 1, **characterized in that** step (c) comprises mapping each record in the consolidated result set into an in-memory data structure including sort fields and a reference to document metadata in the consolidated result set, building a sort index in the memory from the data structure; sorting the data structure using the sort index based on user-supplied criteria and retrieving metadata from the consolidated result set in an order specified by the sorted data structure.

9. Apparatus for performing a search for article content at a plurality of content source sites in response to a query entered into a user computer having a processor and a memory, the apparatus comprising a software program in the memory which software program when carried out by the processor causes the processor to perform the method of any of the claims 1 to 8.
